Europäisches Patentamt

European Patent Office

Office européen des brevets

(11) Veröffentlichungsnummer : **0 057 716**
**B1**

(12) **EUROPÄISCHE PATENTSCHRIFT**

(51) Int. Cl.³ : **A 01 F 25/20, A 23 N 17/00**

(45) Veröffentlichungstag der Patentschrift :
**07.11.84**

(21) Anmeldenummer : **81902315.1**

(22) Anmeldetag : **13.08.81**

(86) Internationale Anmeldenummer :
**PCT/EP 81/00122**

(87) Internationale Veröffentlichungsnummer :
**WO/8200566 (04.03.82 Gazette 82/07)**

(54) **VORRICHTUNG ZUR AUFBEREITUNG VON VIEHFUTTER.**

(30) Priorität : **16.08.80 DE 3031030**

(43) Veröffentlichungstag der Anmeldung :
**18.08.82 Patentblatt 82/33**

(45) Bekanntmachung des Hinweises auf die Patenterteilung : **07.11.84 Patentblatt 84/45**

(84) Benannte Vertragsstaaten :
**AT FR GB SE**

(56) Entgegenhaltungen :
**DE-A- 2 515 052**
**DE-B- 1 160 791**
**DE-B- 1 178 634**
**US-A- 2 551 216**
**US-A- 3 140 161**

(73) Patentinhaber : **HAAKE, Hinrich**
**Gut Stellmoor**
**D-2070 Ahrensburg (DE)**

(72) Erfinder : **HAAKE, Hinrich**
**Gut Stellmoor**
**D-2070 Ahrensburg (DE)**

(74) Vertreter : **Glaeser, Joachim, Dipl.-Ing. et al**
**Dr. M. Kohler Dipl.-Ing. C. Gernhardt Dipl.-Ing. J.**
**Glaeser Königstrasse 28**
**D-2000 Hamburg 50 (DE)**

## Beschreibung

Die Erfindung bezieht sich auf eine Vorrichtung zur Aufbereitung von Viehfutter, welches aus einem Anteil körnigem Festfutter, insbesondere Mais, und einem Wasseranteil besteht, mit einem Silo für das Festfutter, einer Vorrichtung zur Entnahme von Festfutter aus dem Silo, einer Fördereinrichtung für das dem Silo entnommene Festfutter zu einer Zerkleinerungsmühle und mit einem Mischbehälter für das gemahlene Festfutter und das Wasser.

Bei der Aufbereitung von Schweinefutter, welches zu einem wesentlichen Anteil aus Mais besteht, geht man bisher so vor, (US-A-3 140 161) daß man den Maisanteil in einen Rührbehälter gibt, in welchem sich eine vorher festgelegte Wassermenge befindet. Nachdem das Rührwerk in Tätigkeit gesetzt wird, wird der Maisanteil und das Wasser gemischt und kann dann über eine bekannte Verteilungseinrichtung zur Fütterungsstelle transportiert werden.

Die Zugabe von Mais in einen Mischbehälter bereitet schon allein deshalb Schwierigkeiten, weil dieses Festfutter eine klebrige Konsistenz hat, wobei zu berücksichtigen ist, daß die Festanteile nicht allein Maiskörner, sondern auch Spindelreste darstellen. Man ist daher dazu übergegangen, auf dem oberen Teil des Mischbehälters eine Mühle anzuordnen und diese Mühle mit dem Festfutter zu beschicken. Auf diese Art und Weise kann die Mühle das zugeführte Material zerkleinern und direkt in den Mischbehälter abgeben.

In der Zwischenzeit ist auch bereits vorgeschlagen worden, den Mahlvorgang unter Zufügung von Wasser durchzuführen. Dies hat den Vorteil, daß die für den Mahlvorgang erforderliche Energie herabgesetzt werden kann, es müssen jedoch besondere Vorkehrungen getroffen werden, daß das letztendlich aufbereitete Futter im richtigen Mischungsverhältnis zwischen Maisanteil und Wasser steht.

Bei dem Festfutteranteil, insbesondere bei maishaltigem Schweinefutter, wird der Mais nach der Ernte in Silos eingebracht und dort luftdicht abgeschlossen aufbewahrt. Um nun dieses Material aus dem Silo entnehmen zu können, ist beispielsweise eine Fräse am Boden des Silos angeordnet, welche über eine Förderkette das abgefräste Maismaterial nach außen fördert. Eine derartige Einrichtung ist jedoch allein deshalb nicht zufriedenstellend, weil durch die Art der Förderung des abgefrästen Materials nicht verhindert werden kann, daß von außen in den Silo Luft eindringt. Dies führt jedoch zu Zersetzungsvorgängen des gespeicherten Gutes.

Man ist daher dazu übergegangen (DE-A-25 15 052), an das ausgabeseitige Ende der Fräse eine Schnecke anzubringen, welche mit ihrem Gehäuse luftdicht mit dem Gehäuse der Fräse verbunden ist. Die Schnecke fördert nun das abgefräste und herausgeförderte Material nach außen, wobei vorzugsweise auch eine Komprimierung des geförderten Gutes stattfindet, so daß von außen her kein Sauerstoff in den Silobehälter eindringen kann. Lediglich der vorderste Bereich des auf diese Art und Weise herausgeförderten Marerials wird dem Sauerstoff ausgesetzt und nur in einer verhältnismäßig kleinen Schicht an jene Oberfläche anschließend können die gefürchteten Zersetzungsvorgänge eintreten. Nachteilig ist bei diesem Verfahren jedoch, daß verhältnismäßig hohe Energien zum Fördern und Komprimieren des Festfutters erforderlich sind und daß darüber hinaus das komprimierte Material anschließend unter weiterem Energieeinsatz zermahlen bzw. zerschrotet werden muß. Auch ist störend, daß nicht nur der Silobehälter sondern auch die Schnecke mit ihrem Gehäuse und der Mischbehälter und die Zerkleinerungsmühle in einer besonderen räumlichen Anordnung zueinander sein müssen, damit das dem Silo entnommene Material über die Mühle in den Mischbehälter geführt werden kann.

Der Erfindung lieft nun das Problem zugrunde, eine Vorrichtung der eingangs genannten Art so auszugestalten, daß bei der Aufbereitung von Viehfutter möglichst wenig Energie erforderlich ist, andererseits aber eine feine Vermahlung des Viehfutters, insbesondere von Maiskorn-Spindel-Gemischen (CCM) möglich ist. Auch soll die entsprechende Vorrichtung so ausgestaltet werden, daß die räumlichen Zuordnungen der einzelnen Anlageteile zueinander nicht kritisch sind, insbesondere soll aus mehreren Silobehältern Viehfutter entnommen werden können und in ein und demselben Mischbehälter aufbereitet werden können.

Die Erfindung ist dadurch gekennzeichnet, daß zwischen der Fördereinrichtung und der Zerkleinerungsmühle ein Siphon angeordnet ist, der eingangs- und ausgangsseitig mit Wasserzulaufleitungen versehen ist.

Der vorzugsweise am Silo angeordnete Siphon ermöglicht einen einwandfreien Abschluß des sich im Silo befindlichen Gutes von der Außenluft. Zufolge der Wasserfüllung im Siphon kann nämlich von außen her kein Gas in den Silo eindringen. Andererseits wird das aus dem Silo entnommene Gut durch den Siphon hindurchgeführt und dabei wird zwangsläufig auch ein Teil der Wasserfüllung des Siphons mitgenommen, so daß gemäß der Erfindung für beide Seiten des Siphons Wasserzuläufe vorgesehen sind.

Würde man nur an der Ausgangsseite des Siphons Wasser zugeben, so könnte hierdurch kein aus dem Silo entnommenes Gut gefördert werden. Würde man hingegen nur auf der anderen Seite des Siphons Wasser zugeben, so würde zwar der Förderungsvorgang des Gutes verbessert werden, es könnte jedoch der Fall eintreten, daß das Wasser zu weit in den Silo zurückströmt, was zwar nicht schädlich, jedoch sinnlos wäre.

Gemäß der Erfindung sind nunmehr die Wasserzuläufe für den Siphon über Ventile gesteuert, so daß über ein vorgegebenes Program in Abhängigkeit von bestimmten Betriebsgrößen (beispielsweise von der Stromaufnahme des Motors für die Zerkleinerungsmühle) Wasser in die Eingangs- oder Ausgangsseite des Siphons zugeführt werden kann. Man könnte zwar theoretisch die zugeführte Wassermenge direkt aus der Wasserversorgung nehmen, man müßte dann jedoch dafür Sorge tragen, daß das letztendlich hergestellte Viehfutter die gewünschte Zusammensetzung aus Festfutter und Wasser hat. Daher ist es gemäß der Erfindung zweckmäßig, wenn vor dem Aufbereitungsvorgang in den Mischbehälter eine bestimmte, zuvor festgesetzte Wassermenge eingegeben wird. Danach wird die Wasserzufuhr beendet und das bei der Vorrichtung gemäß der Erfindung benötigte Wasser wird dem Mischbehälter entnommen und auf die Eingangs- oder Ausgangsseite des Siphons geleitet. Die zugeführten Wassermengen sind nicht kritisch, sie können das angesetzte Mischungsverhältnis nicht beeinträchtigen, da der Aufbereitungsvorgang dann beendigt wird, wenn genügend Festfutter aus dem Silo entnommen wird, wobei hierunter diejenige Menge zu verstehen ist, die zu der anfangs vorgegebenen Wassermenge in gewünschter Beziehung steht. Bedeutsam ist, daß durch dieses Verfahren das vorgegebene Mischungsverhältnis zwangsläufig eingehalten werden kann, wobei die Förderungsmenge pro Zeiteinheit über die Zufuhr von Wasser in die Eingangs- bzw. Ausgangsseite des Siphons nach Wunsch eingestellt werden kann.

Gemäß der Erfindung ist im Siphon im Bodenteil irgendeine Fördereinrichtung vorgesehen, welche das dort befindliche Festfutter von der einen Siphonseite zur anderen fördert. Hier sind eine Reihe von Einrichtungen denkbar, beispielsweise könnte auch eine Schnecke verwendet werden. Bei der Aufbereitung von Getreide beispielsweise könnte möglicherweise auf eine Fördereinrichtung verzichtet werden.

Bei der Aufbereitung von Maisviehfutter (CCM) erweist sich ein Teller mit auf ihm befindlichen Stegen als geeignete Fördereinrichtung, so daß durch Drehung des Tellers das Festfutter von der einen zur anderen Siphonseite geführt werden kann. Bei der gemäß der Erfindung gewählten Ausführungsform ist die Antriebswelle für den Teller außerhalb des Siphons gelagert, gleichzeitig befindet sich der Antrieb für diese Welle außerhalb des Siphons. Auf diese Art und Weise entfallen schwierige Lagerungs- und Abdichtungsprobleme. Die Drehzahl des Tellers kann gemäß der Erfindung fest vorgegeben werden, über die Drehzahl des Tellers nämlich soll die Fördermenge an Festfutter nicht reguliert werden, da gemäß der Erfindung hierfür die zugegebenen Wassermengen in den Siphon verantwortlich sein sollen.

Die Erfindung kann im Zusammenhang mit einer bekannten Harvestore-Untenentnahmefräse realisiert werden, es kann gemäß der Erfindung auch eine andere Förder- und Abtrageinrichtung eingesetzt werden. So können gemäß der Erfindung im Silo im unteren Teil Düsen angebracht werden, deren Wasserstrahl Material aus dem Silo freilöst. Dieses Material fällt dann in den unteren Bereich des Silos, insbesondere wenn nach einer bestimmten Betriebszeit die Wasserzufuhr zu den Düsen abgeschaltet wird. Nunmehr können weitere Düsen in Tätigkeit gesetzt werden, die das sich im unteren Bereich des Silos angesammelte Material in Richtung auf den Siphon fördern. Das für die Düsen verwendete Wasser kann ebenfalls aus dem Mischbehälter abgezweigt werden und über Pumpen auf den erforderlichen Druck gebracht werden. Insgesamt ist im Zusammenhang mit dem Wasserhaushalt bei der Vorrichtung gemäß der Erfindung festzustellen, daß für eine bestimmte aufzubereitende Futtermenge genügend Wasser deshalb zur Verfügung steht, weil sich dieses Wasser in einem Kreislauf bewegen kann, wobei dennoch sichergestellt bleibt, daß kein zu wasserreiches Futter erzeugt wird.

Die Erfindung kann auch im Zusammenhang mit einer Austrageinrichtung verwendet werden, die am unteren Ende eines Harvestore-Behälters angeordnet ist und im wesentlichen aus einer Spindel besteht, die über einen Motor angetrieben wird. Auf dieser Spindel ist nun eine Kette aufgewickelt, welche je nach axialer Lage eine mehr oder weniger große radiale Länge aufweist. Wird die Spindel nun gedreht, so kann die sich mitdrehende Kette das sich im Silobehälter befindliche Erntegut abschlagen, lockern, und loslösen, so daß dieses nach unten in den Sammelbehälter bzw. in die Fördereinrichtung über den Siphon zur Mühle fällt.

Weitere Ausführungsformen der Erfindung gehen aus den einzelnen Ansprüchen hervor.

Die Erfindung wird nachstehend an Hand der Zeichnung beispielsweise erläutert.

Figur 1 zeigt eine unmaßstäbliche schaubildliche Darstellung einer Vorrichtung gemäß der Erfindung.

Figur 2 zeigt eine ebenfalls unmaßstäbliche schaubildliche Darstellung einer abgewandelten Ausführungsform gemäß der Erfindung.

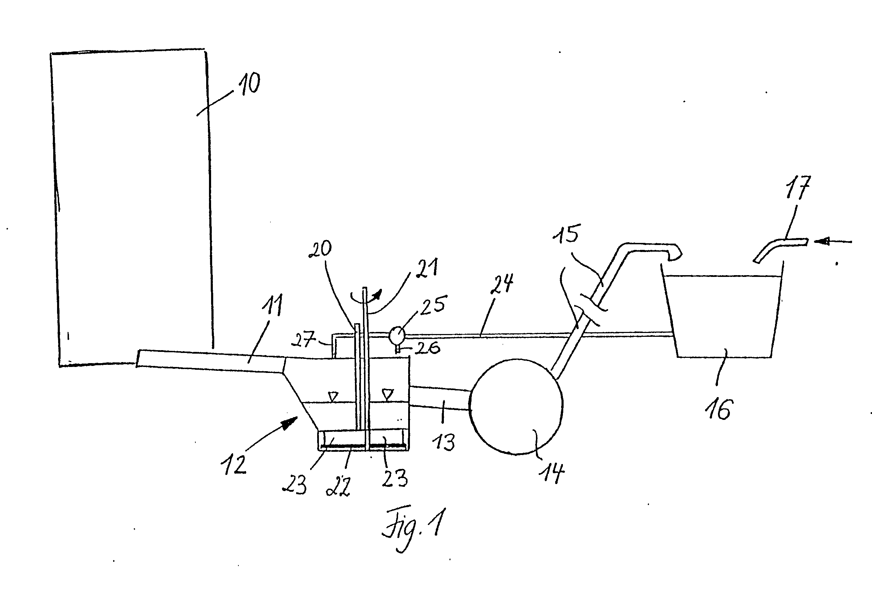

In der Fig. 1 ist mit 10 ein Silobehälter gezeigt, an welchem sich eine Fördereinrichtung 11 befindet. Unmittelbar im Anschluß an die Fördereinrichtung befindet sich ein Siphon 12, welcher mit der Fördereinrichtung 11 abgedichtet verbunden ist. An der Ausgangsseite des Siphons befindet sich ein Rohr 13, welches zu einer Verkleinerungsmühle 14 führt. Von der Zerkleinerungsmühle 14 wird das zerkleinerte Material zusammen mit mehr oder weniger Wasser über eine Rohrleitung 15 zum Mischbehälter 16 geführt. Der Mischbehälter 16 ist weiterhin mit einer Wasserzulaufleitung 17 versehen.

Es ist bedeutsam, daß sowohl die Leitung 13 als auch die Leitung 15 irgendeine Form haben können. Es ist nicht erforderlich, zwischen den einzelnen Teil geradlinige Verbindungen einzuhalten, beispielsweise könnte die Leitung 15 zwei aber auch zwanzig Meter lang sein, was im Hinblick auf die Förderung deshalb nicht kritisch ist, weil hier zerkleinertes Material in Wasser gefördert wird.

Der in der Fig. 1 gezeigte Siphon 12 weist einen im wesentlichen quaderförmigen Aufbau auf, wobei sich in der Mitte eine Trennwand 20 befindet, welche jedoch nicht bis zum Boden des Siphons führt. Im Bodenteil des Siphons befindet sich ein Teller 22 mit mehreren radial angeordneten Stegen 23. Der Teller ist mit einer Antriebswelle 21 verbunden, welche außerhalb des Siphons gelagert und auch außerhalb des Siphons angetrieben wird, so wie dies durch einen Pfeil dargestellt ist. Im Siphon wird ein bestimmter Wasserstand eingestellt, so wie dies durch die beiden Dreiecke angedeutet ist.

Vom Mischbehälter 16 führt eine Leitung 24 zu einem Umschaltventil 25, welches eine Verbindung von der Leitung 24 entweder zu einer Leitung 26 oder zu einer Leitung 27 herstellen kann. Selbstverständlich können die beiden Leitungen 26 und 27 auch jeweils für sich über separate Leitungen mit dem Mischbehälter 16 verbunden sein, wobei weitere Absperrventile für jede Leitung vorgesehen sein können.

Vor Inbetriebnahme der eigentlichen Aufbereitungsvorrichtung wird über die Leitung 17 eine bestimmte Menge Wasser in den Mischbehälter 16 gegeben. Von dort wird Wasser über die Leitung 24 in den Siphon entweder auf der einen oder der anderen Seite eingeleitet. Schließlich wird die Fördereinrichtung 11 in Tätigkeit gesetzt, so daß in die linke Seite des Siphons 12 Material gelangt, welches durch den sich drehenden Teller 22 von der linken zur rechten Seite gefördert wird. Je nach der über die Leitung 27 zugegebenen Wassermenge wird mehr oder weniger Festmaterial in die rechte Seite des Siphons geführt und gelangt schließlich über die Leitung 13 in die Zerkleinerungsmühle. Von dort wird das zerkleinerte Material zusammen mit Wasser über die Leitung 15 in den Mischbehälter geführt. Im Mischbehälter setzt sich dann das hineingeförderte Material vom Wasser ab, wobei Wasser über die Leitung 24 in gewünschter Menge in den Siphon gefördert werden kann. Erst nachdem eine ausreichende Feststoffmenge in den Mischbehälter 16 eingegeben worden ist, wird der weitere Förderungsvorgang eingestellt und die nicht gezeigte Mischeinrichtung im Mischtank 16 in Tätigkeit gesetzt.

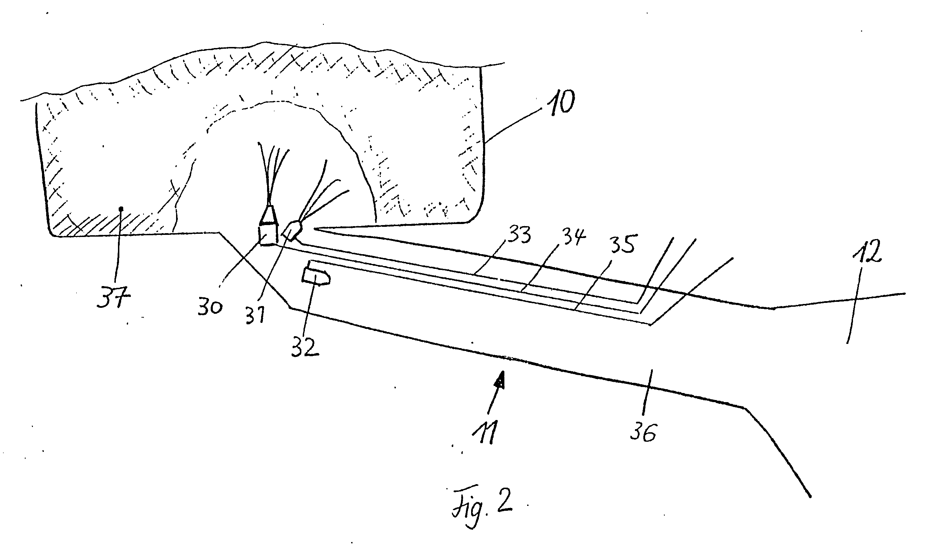

Fig. 2 zeigt eine abgewandelte Fördereinrichtung gemäß der Erfindung. Diese Fördereinrichtung besteht im wesentlichen aus einem zylindrischen Rohr 36, welches mit dem einen Ende mit dem Siphon 12 abgedichtet verbunden ist und mit dem anderen Ende am Boden des Silos 10 abgedichtet angeschlossen ist. Am unteren Ende des Silos bzw. am Rohrende befinden sich Düsen 30 und 31. Es sind lediglich zwei Düsen gezeigt, selbstverständlich könnte eine Vielzahl von Düsen verwendet werden, weiterhin können bewegbare etwa taumelnde Düsen verwendet werden, so daß bei Inbetriebnahme der Düsen 30 und 31, indem über die gezeigten Leitungen 33 und 34 Wasser zugesetzt wird, von dem sich im Silo 10 befindlichen Material 37 ein mehr oder weniger kegelförmiger Bereich abgetragen wird. Werden die Düsen 30 und 31 nicht weiter mit Wasser versorgt, so kann sich das abgetragene Material am unteren Bereich des Silos 10 bzw. am Anfangsende des Rohres 36 sammeln. Nunmehr wird eine Düse 32 über eine Leitung 35 mit Druckwasser versorgt, so daß das angesammelte Material in den Siphon gefördert werden kann.

Die in der Figur 2 gezeigte Fördereinrichtung ist lediglich in groben Zügen geschildert worden. Es können alle Arten von Düsen oder Düsenformen eingesetzt werden, es ist auch daran gedacht, das Wasser impulsartig unter Druck zu setzen, so daß eine möglichst gute Abtragwirkung erreicht wird. In jedem Fall müssen die Düsen 30 und 31 einerseits und die Düsen 32 andererseits wechselweise in Tätigkeit gesetzt werden, was jedoch über ein vorgegebenes Programm ohne weiteres gesteuert werden kann.

**Ansprüche**

1. Vorrichtung zur Aufbereitung von Viehfutter, welches aus einem Anteil körnigem Festfutter, insbesondere Mais, und einem Wasseranteil besteht, mit einem Silo (10) für das Festfutter, einer Vorrichtung zur Entnahme von Festfutter aus dem Silo (10), einer Fördereinrichtung (11) für das dem Silo (10) entnommene Festfutter zu einer Zerkleinerungsmühle (14) und mit einem Mischbehälter (16) für das gemahlene Festfutter und das Wasser, dadurch gekennzeichnet, daß zwischen der Fördereinrichtung (11) und der Zerkleinerungsmühle (14) ein Siphon (12) angeordnet ist, der eingangs- und ausgangsseitig mit Wasserzulaufleitungen (26, 27) versehen ist.

2. Vorrichtung zur Aufbereitung von Viehfutter nach Anspruch 1, dadurch gekennzeichnet, daß in den Wasserzulaufleitungen (26, 27) mindestens ein Schaltventil (25) vorgesehen ist.

3. Vorrichtung zur Aufbereitung von Viehfutter nach Anspruch 1, dadurch gekennzeichnet, daß ein Umschaltventil (25) in beiden Wasserzulaufleitungen (26, 27) zwecks Umschaltens der Wasserzufuhr in die Eingangs- oder Ausgangsseite des Siphons (12) angeordnet ist.

4. Vorrichtung zur Aufbereitung von Viehfutter nach einem der Ansprüche 1 bis 3, dadurch gekennzeichnet, daß eine Verbindungsleitung (24) zwischen den Zulaufleitungen (26, 27) für den Siphon (12) und den Mischtank (16) vorgesehen ist.

5. Vorrichtung zur Aufbereitung von Viehfutter nach einem der Ansprüche 1 bis 4, dadurch gekennzeichnet, daß der Siphon (12) einen im wesentlichen quaderförmigen Behälter aufweist, der in seiner Mitte eine Trennwand (20) aufweist und an dessen Boden eine zweite Fördereinrichtung (22, 23) für Festfutter und Wasser von der einen zur anderen Seite des Siphons vorgesehen ist.

6. Vorrichtung zur Aufbereitung von Viehfutter nach Anspruch 5, dadurch gekennzeichnet, daß die zweite Fördereinrichtung als Tellerradförderer (22, 23) ausgebildet ist, dessen Teller (22) unterhalb der Trennwand (20) angeordnet ist und Stege (23) aufweist und dessen Antriebswelle (21) aus dem Siphon (12) nach oben herausgeführt ist.

7. Vorrichtung zur Aufbereitung von Viehfutter nach Anspruch 6, dadurch gekennzeichnet, daß die Antriebswelle (21) außerhalb des Siphons (12) gelagert und angetrieben ist.

8. Vorrichtung zur Aufbereitung von Viehfutter nach einem der Ansprüche 1 bis 7, dadurch gekennzeichnet, daß die Vorrichtung zur Entnahme des Festfutters und die Fördereinrichtung als Fräse (11) mit umlaufender Kette ausgebildet ist.

9. Vorrichtung zur Aufbereitung von Viehfutter nach einem der Ansprüche 1 bis 7, dadurch gekennzeichnet, daß die Vorrichtung zur Entnahme des Festfutters und die Fördereinrichtung aufweist : im Boden des Silos (10) angeordnete Wassersprühdüsen (30, 31) zum Abtragen des Festfutters (37) und weiterhin eine dritte Fördereinrichtung zum Transport des abgetragenen Festfutters aus dem Silo (10) heraus und zum Siphon (12) hin.

10. Vorrichtung zur Aufbereitung von Viehfutter nach Anspruch 9, dadurch gekennzeichnet, daß die dritte Fördereinrichtung Wasserdüsen (32) aufweist, deren Wasserstrahlen abgetragenes und gelöstes Festfutter (37) zum Siphon (12) hintreiben.

11. Vorrichtung zur Aufbereitung von Viehfutter nach Anspruch 9 oder 10, gekennzeichnet durch eine Steuereinrichtung, die entweder die Düsen (30, 31) zum Abtragen oder die Düse (32) zum Transport abgetragenen Festfutters mit Druckwasser speist.

12. Vorrichtung zur Aufbereitung von Viehfutter nach einem der Ansprüche 9 bis 11, dadurch gekennzeichnet, daß die Düsen (30, 31) für das Abtragen des Festfutters (37) bewegbar, drehbar oder schwenkbar angeordnet sind.

13. Vorrichtung zur Aufbereitung von Viehfutter nach einem der Ansprüche 9 bis 12, dadurch gekennzeichnet, daß die Düsen (30, 31, 32) die zugehörigen Wasserzulaufleitungen (33, 34, 35) in einem Rohr (36) untergebracht sind, welches an dem Silo (10) und dem Siphon (12) dicht angeschlossen ist und auch zur Förderung des abgetragenen Festfutters (37) zum Siphon (12) dient.

14. Vorrichtung zur Aufbereitung von Viehfutter nach einem der Ansprüche 1 bis 5, dadurch gekennzeichnet, daß die zweite Fördereinrichtung als Schnecke ausgebildet ist, welche in einem Gehäuse untergebracht ist, dessen eines Ende mit dem unteren Teil des Silobehälters und dessen anderes Ende mit der Eingangsseite der Mühle verbunden ist, wobei das Gehäuse der Schnecke selbst Teil des Siphons ist.

## Claims

1. A plant for the preparation of fodder comprising a portion of solid foodstock in grain form, particularly maize, and a portion of water, said plant including a silo (10) for the solid foodstock, a device for taking solid foodstock out of the silo (10), a conveying device (11) for conveying the solid foodstock taken out of the silo (10) to a crushing mill (14), and a mixing vessel (16) for the mixing of the crushed solid foodstock and the water, characterized in that a siphon (12) is arranged between the conveying device (11) and the crushing mill (14), said siphon (12) being provided with water supply conduits (26, 27) at the inlet and outlet sides thereof.

2. A plant for the preparation of fodder according to claim 1, characterized in that at least one switching valve (25) is provided in the water supply conduits (26, 27).

3. A plant for the preparation of fodder according to claim 1, characterized in that a change-over valve (25) is provided in both water supply conduits (26, 27) for switching the water supply to the inlet side or the outlet side of the siphon (12).

4. A plant for the preparation of fodder according to any one of claims 1 to 3, characterized in that a connecting pipe or conduit (24) is provided between the supply conduits (26, 27) for the siphon (12) and the mixing tank (16).

5. A plant for the preparation of fodder according to any one of claims 1 to 4, characterized in that the siphon (12) comprises a substantially square blocklike tank having a partition (20) in the middle thereof and a second conveying device (22, 23) is provided at the bottom of the tank to convey solid foodstock and water from one side of the siphon to the other.

6. A plant for the preparation of fodder according to claim 5, characterized in that the second conveying device is in the form of a rotatable tray or plate conveyor (22, 23) the tray or plate (22) of which is disposed below the partition (20) and is provided with webs or ribs (23) and the drive shaft (21) of which extends upwardly out of the siphon (12).

7. A plant for the preparation of fodder according to claim 6, characterized in that the drive shaft (21) is supported and driven outside the siphon (12).

8. A plant for the preparation of fodder according to any one of claims 1 to 7, characterized in that the device for taking out the solid foodstock and the conveying device are in the form of a milling cutter (11) including a revolving chain.

9. A plant for the preparation of fodder according to any one of claims 1 to 7, characterized in that the device for taking out the solid foodstock and the conveying device comprises : water spray nozzles (30, 31) located in the base of the silo (10) for dislodging the solid foodstock (37) and, further, a third conveying device for transporting the dislodged foodstock out of the silo (10) and toward the siphon (12).

10. A plant for the preparation of fodder according to claim 9, characterized in that the third conveying device comprises water nozzles (32) the water jets of which drive dislodged and detached solid foodstock (37) toward the siphon (12).

11. A plant for the preparation of fodder according to claim 9 or 10, characterized by a control device which supplies pressure water either to the nozzles (30, 31) for dislodging solid foodstock or to the nozzle (32) for transporting dislodged solid foodstock.

12. A plant for the preparation of fodder according to any one of claims 9 to 11, characterized in that the nozzles (30, 31) for the dislodging of the solid foodstock (37) are arranged to be movable, rotatable or swingable.

13. A plant for the preparation of fodder according to any one of claims 9 to 12, characterized in that the nozzles (30, 31, 32) the associated water supply conduits (33, 34, 35) are located within a conduit (36) which is sealedly connected to the silo (10) and to the siphon (12) and also serves for conveying the dislodged solid foodstock (37) to the siphon (12).

14. A plant for the preparation of fodder according to any one of claims 1 to 5, characterized in that the second conveying device is in the form of a worm which is accommodated in a housing, one end of said housing being connected to the lower end of the silo and the other end of said housing being connected to the inlet of the mill, the housing of the worm being itself a part of the siphon.

**Revendications**

1. Installation pour la préparation de fourrage ou aliment pour le bétail, lequel est constitué par une partie d'élément consistant en forme de grains, en particulier du maïs, et par une partie d'eau, comportant un silo (10) pour l'aliment consistant, un dispositif pour extraire l'aliment consistant hors du silo (10), un dispositif transporteur (11) pour l'aliment consistant extrait du silo (10) pour l'amener à un broyeur réducteur ou pulvérisateur (14) et un récipient mélangeur (16) pour l'aliment consistant broyé et l'eau, caractérisée en ce qu'entre le dispositif transporteur (11) et le pulvérisateur (14) il est disposé un siphon (12), qui est pourvu de conduit d'amenée d'eau (26, 27) sur les côtés d'entrée et de sortie.

2. Installation pour la préparation de fourrage selon la revendication 1, caractérisée en ce qu'au moins une soupape de coupure (25) est prévue dans les conduits d'amenée d'eau (26, 27).

3. Installation pour la préparation de fourrage selon la revendication 1, caractérisée en ce qu'une soupape de commutation (25) est disposée dans les deux conduits d'amenée d'eau (26, 27) dans le but de permuter l'arrivée d'eau aux côtés d'entrée et de sortie du siphon (12).

4. Installation pour la préparation de fourrage selon l'une des revendications 1 à 3, caractérisée en ce qu'une conduite de jonction (24) est prévue entre les conduits d'amenée (26, 27) pour le siphon (12) et le réservoir mélangeur (16).

5. Installation pour la préparation de fourrage selon l'une des revendications 1 à 4, caractérisée en ce que le siphon (12) comporte un récipient sensiblement parallélépipédique qui présente une paroi séparatrice (20) en son milieu et sur le fond duquel un deuxième dispositif transporteur (22, 23) pour l'aliment consistant et l'eau est prévu entre un côté et l'autre du siphon.

6. Installation pour la préparation de fourrage selon la revendication 5, caractérisée en ce que le deuxième dispositif transporteur est établi sous la forme d'un transporteur à roue cuvette (22, 23) dont la cuvette (22) est disposée en dessous de la paroi de séparation (20) et qui comporte des réglettes (23) et dont l'arbre d'entraînement (21) est dirigé vers le haut hors du siphon (12).

7. Installation pour la préparation de fourrage selon la revendication 6, caractérisée en ce que l'arbre d'entraînement (21) repose et est entraîné en dehors du siphon (12).

8. Installation pour la préparation de fourrage selon l'une des revendications 1 à 7, caractérisée en ce que le dispositif pour extraire l'aliment consistant et dispositif transporteur est établi sous forme de fraise (11) à chaîne circulante.

9. Installation pour la préparation de fourrage selon l'une des revendications 1 à 7, caractérisée en ce que le dispositif d'extraction de l'aliment consistant et dispositif transporteur comprend : des tuyères de pulvérisations d'eau (30, 31) disposées dans le fond du silo (10) pour enlever l'aliment consistant (37) et de plus un troisième dispositif transporteur pour transporter hors du silo (10) l'aliment consistant enlevé vers le siphon (12).

10. Installation pour la préparation de fourrage selon la revendication 9, caractérisée en ce que le troisième dispositif transporteur comporte des tuyères d'eau (32) dont les jets d'eau chassent l'aliment consistant (37) enlevé et détaché, vers le siphon (12).

11. Installation pour la préparation de fourrage selon la revendication 9 ou 10, caractérisée par un dispositif de commande qui alimente en eau sous pression les tuyères (30, 31) pour l'érosion de l'aliment consistant ou la tuyère (32) pour le transport de l'aliment consistant enlevé.

12. Installation pour la préparation de fourrage selon l'une des revendications 9 à 11, caractérisée en ce que les tuyères (30, 31) pour l'enlèvement de l'aliment consistant (37) sont disposées de façon mobile, tournante ou pivotante.

13. Installation pour la préparation de fourrage selon l'une des revendications 9 à 12, caractérisée en ce que les conduits d'amenée d'eau (33, 34, 35) correspondant aux tuyères (30, 31, 32) sont logés dans un tube (36) qui est raccordé de façon étanche au silo (10) et au siphon (12) et qui sert également à transporter l'aliment consistant enlevé (37) vers le siphon (12).

14. Installation pour la préparation de fourrage selon l'une des revendications 1 à 5, caractérisée en ce que le deuxième dispositif transporteur est établi sous la forme d'une vis sans fin qui est logée dans un boîtier dont une extrémité est reliée à la partie inférieure du réceptacle du silo et dont l'autre extrémité est reliée au côté d'entrée du broyeur, le boîtier de la vis sans fin étant lui-même une partie du siphon.

Fig. 1

0 057 716

Fig. 2